# EUROPEAN PATENT SPECIFICATION

(11) **EP 1 666 363 B1**
(45) Date of publication and mention of the grant of the patent: **26.08.2015**
(21) Application number: 04773353.0
(22) Date of filing: 15.09.2004
(51) Int. Cl.: B65D 5/42, B65D 5/40

(54) **METHOD OF APPLYING A SEALING TAPE, SEALING TAPE FOR PAPER CONTAINER AND PAPER CONTAINER WITH LONGITUDINAL SEALING TAPE**
VERFAHRENREN ZUM ANBRINGEN EINES DICHTUNGSBANDES AN EINEN PAPIERBEHÄLTER;DICHTUNGSBAND UND PAPIERBEHÄLTER MIT EINEM LÄNGSDICHTUNGSBAND
METHODE D'APPLICATION D'UNE BANDE D'ETANCHEITE, BANDE D'ETANCHEITE ET RECIPIENT EN PAPIER EQUIPE DE LADITE BANDE D'ETANCHEITE LONGITUDINALE

(30) Priority: 17.09.2003 JP 2003324148
(43) Date of publication of application: 07.06.2006
(73) Proprietor: Nippon Paper Industries Co., Ltd, Kita-ku Tokyo (JP)
(72) Inventor: SASE, Kazuhiko, NIPPON PAPER-PAK CO., LTD., Kita-ku, Tokyo 1140002 (JP); OKUDE, Hideki, NIPPON PAPER-PAK CO., LTD., Shinjuku-ku, Tokyo 1620826 (JP); ICHIMARU, Koji, NIPPON PAPER-PAK CO., LTD., Shinjuku-ku, Tokyo 1620826 (JP); TAKAHASHI, Hisao, NIPPON PAPER-PAK CO., LTD., Kita-ku, Tokyo 1140002 (JP)
(74) Representative: Stanners, David Ralph
(86) International application number: PCT/JP2004/013867
(87) International publication number: WO 2005/028320

(56) References cited:
- WO-A-00/44632
- WO-A1-00/44632
- JP-A- 2 024 112
- JP-A- 7 315 362
- JP-A- 11 115 089
- JP-A- 11 115 089
- JP-A- 11 236 030
- JP-A- 11 236 030
- JP-A- 2000 273 405
- JP-A- 2000 273 405
- JP-A- 2001 213 471
- JP-A- 2001 301 106
- JP-A- 2001 301 106

## Description

### TECHNICAL FIELD

The present invention relates to a sealing tape in a paper container, which is used for covering and sealing a seam exposed to an inner surface of a paper container formed of a packaging material having a base layer made of a paperboard and outermost layers of both of front and back surfaces made of a heat-fusible synthetic resin, and more particularly, to a longitudinal sealing tape in a paper container, which is used for covering a longitudinal seam exposed to an inner surface of a paper container formed through a step of forming a tube of the packaging material by superposing and heat-fusing both of longitudinal edges of a belt-like packaging material having a base layer made of a paperboard and outermost layers of both of front and back surfaces made of a heat-fusible synthetic resin on each other, and to a method of applying the longitudinal sealing tape into a paper container, and to a paper container with the longitudinal sealing tape, which is longitudinally sealed by the longitudinal sealing tape in the paper container.

### BACKGROUND ART

In a technical field of a paper container which receives beverages and the like, as a sealing tape for use in a sealed portion and for covering a seam thereof, there are known: a single-layer tape made of a thermoplastic resin containing as a main component singly alow-density polyethylene(hereinafter, referred to as LDPE) resin, or the LDPE resin which adopts blended matter of the LDPE resin and a linear low-density polyethylene (hereinafter, referred to as LLDPE) resin or blended matter of the LDPE resin and a high-density polyethylene (hereinafter referred to as HDPE) resin; a three-layer tape, in which heat-fusible synthetic resin layers containing singly the LDPE resin or the LDPE resin as a main component are arranged on outermost layers of both of front and back surfaces, a material such as the HDPE resin, an extended polyethylene terephthalate (hereinafter, referred to as PET) resin, ethylene-vinyl alcohol copolymer saponified matter (hereinafter, referred to as EVOH) resin, or an amorphous copolyester resin is used as a gas barrier material for a core layer, and the core layer and outermost layers of both of front and back surfaces are pasted together by a dry lamination method or an extrusion laminationmethod; and the like (see JP 2001-354916 A) or e.g. EP 1164085 which accords with the preamble of appended claim 1.

As the paper container formed by using those sealing tapes, there is one formed in such a manner that both of longitudinal edges of a belt-like packaging material having a base layer made of a paperboard and at least outermost layers of both of front and back surfaces made of a heat-fusible synthetic resin are superposed on each other and longitudinally sealed, the beverages and the like as contents are filled in a packaging material tube thus formed while laterally sealing a predetermined width thereof at an interval of one paper container, an intermediate portion of a laterally sealed region is cut and separated, and a final form such as a brick-like shape is obtained.

However, in the paper container formed in such a manner, there has been a problem in that a poor sealing occurs in a portion where the laterally sealed portion and the longitudinally sealed portion are superposed on each other. To be specific, in the portion where the laterally sealed portion and the longitudinally sealed portion are superposed on each other, slight spaces are sometimes generated between the laterally sealed packaging material and end surfaces of the longitudinal sealing tape. In particular, in the case of using, as the longitudinal sealing tape, the three-layer tape having the core layer made of the gas barrier material, the gas barrier material has a high melting point in general, and films having the gas barrier material formed thereon, and among them, a film having the gas barrier material extended and formed thereon is poor in softness and elongation. Accordingly, even by heating and pressurization when the packaging material tube is laterally sealed, the tape material cannot fill the above-described spaces, thereby sometimes causing the poor sealing.

### DISCLOSURE OF THE INVENTION

In view of this, as a result of various researches for the purpose of solving these problems, attention has been paid to the fact that, in the tape with the multi-layered structure, which has the heat-fusible synthetic resin layers as outermost layers of both of front and back surfaces thereof, when the longitudinal sealing tape is formed by a co-extrusion inflation method, low-temperature sealing property of the heat-fusible synthetic resin layers as outermost layers is enhanced, and the entire film having the multi-layered structure is formed while hardly being subjected to the elongation, and exhibits excellent softness and elongation. Then, it was found that, in the case of using this sealing tape as the longitudinal sealing tape in a paper container, which is used for covering the longitudinal seam exposed to the inner surface of the paper container formed through the step of forming the tube of the packaging material by superposing and heat-fusing both of the longitudinal edges of the belt-like packaging material having the base layer made of the paperboard and outermost layers of both of front and back surfaces made of the heat-fusible synthetic resin on each other, the spaces between the packaging material and the end surfaces of the longitudinal sealing tape can be effectively filled by the heating and the pressurization at the time of the lateral sealing. Thus, the present invention was completed.

It is an object of the present invention to provide a sealing tape in a paper container capable of obtaining complete sealability, particularly, a longitudinal sealing tape useful in the case of covering a longitudinal seam exposed to an inner surface of a paper container formed through a step of forming a tube of the packaging material by superposing and heat-fusing both of longitudinal edges of a belt-like packaging material having a base layer made of a paperboard and outermost layers of both of front and back surfaces made of a heat-fusible synthetic resin on each other, and to provide a paper container with the longitudinal sealing tape.

It is another object of the present invention to provide a longitudinal sealing tape in a paper container, which is capable of offering gas barrier property, and to provide a paper container with the longitudinal sealing tape.

The object of the present invention is achieved by a method according to appended claim 1, a paper container according to appended claim 3 and a longitudinal sealing tape according to appended claim 4.

According to the sealing tape in a paper container, which is composed as described above, the following effects are obtained. That is, the film formed by the co-extrusion inflation method in which the resin is fused and formed at a temperature lower than that of the extrusion lamination method is not subjected to an excessive heat history as compared with films formed by other methods. Accordingly, the heat-fusible synthetic resin layers forming outermost layers of both of front and back surfaces of the film having the multi-layered structure exhibit more excellent sealing property at the time of fusion thereof, and the entire film having the multi-layered structure is formed while hardly being subjected to the elongation. Therefore, the film exhibits excellent softness and elongation. Hence, in the case where the seam exposed to the inner surface of the paper container formed of the packaging material is covered with the sealing tape and sealed, complete sealability can be obtained.

Further, in the case of using such a sealing tape as a longitudinal sealing tape in a paper container, which is used for covering a longitudinal seam exposed to an inner surface of a paper container formed through a step of forming a tube of the packaging material by superposing and heat-fusing both of longitudinal edges of a belt-like packaging material having a base layer made of a paperboard and outermost layers of both of front and back surfaces made of a heat-fusible synthetic resin on each other, when the packaging material tube is laterally sealed, which is formed in such a manner that the longitudinal seam in which both of the longitudinal edges of the packaging material are superposed on each other is covered with the longitudinal sealing tape composed of the film and is longitudinally sealed, spaces between the laterally sealed packaging material and end surfaces of the longitudinal sealing tape are sufficiently filled by heating and pressurization at the time of the lateral sealing owing to elongation of the film, thus making it possible to obtain complete sealability.

The longitudinal sealing tape in a paper container has a tensile elongation of 300 to 800%.

In such a way, the entire film having the above-described multi-layered structure exhibits the optimum softness and elongation at the time of the lateral sealing thereof, and the spaces between the laterally sealed packaging material and the end surfaces of the longitudinal sealing tape are sufficiently filled by the heating and the pressurization at the time of laterally sealing the packaging material tube, thus making it possible to obtain the complete sealability more surely.

Further, it is preferable that, in the above-described longitudinal sealing tape in a paper container, a core layer in the multi-layered structure be formed of a gas barrier material layer.

Here, a gas barrier material for use in the core layer can be formed of a polyethylene terephthalate (PET) resin, an amorphous copolyester resin, an ethylene vinyl alcohol (EVOH) resin, or the like.

In this case, the longitudinal seam of the paper container is covered with the longitudinal sealing tape in a paper container to be longitudinally sealed thereby, thus making it possible to achieve gas barrier of the seam portion by the longitudinal sealing tape in a paper container. Hence, in the case where the packaging material of the paper container uses a material having the gas barrier property, oxygen permeation from the outside of the container is preventedmore effectively, and quality deformation, deterioration, and the like of contents such as beverages owing to contact thereof with the oxygen are prevented.

Further, in the above-described longitudinal sealing tape in a paper container, the heat-fusible synthetic resin layers forming outermost layers of both of front and back surfaces of the film are formed of polyethylene resin layers.

In this case, the heat-fusible synthetic resin layers formed of the polyethylene resin layers are fused by the heating and the pressurization at the time of laterally sealing the packaging material tube, and sufficiently fill the spaces between the laterally sealed packaging material and the end surfaces of the longitudinal sealing tape, thus making it possible to obtain the complete sealability.

According to the paper container with a longitudinal sealing tape, which is composed as described above, the following effects are obtained. To be specific, the filmconstituting the longitudinal sealing tape in a paper container, which covers the paper container, is formed by the co-extrusion inflation method in which the resin is fused and formed at a temperature lower than that of the extrusion lamination method, and is not subjected to an excessive heat history as compared with films formed by other methods. Accordingly, the heat-fusible synthetic resin layers forming outermost layers of both of front and back surfaces of the film having the multi-layered structure exhibit more excellent sealing property at the time of fusion thereof, and the entire film having the multi-layered structure is formed while hardly being subjected to the elongation. Therefore, the film exhibits excellent softness and elongation. Hence, the longitudinal seam of the packaging material is covered with the longitudinal sealing tape in a paper container, which is composed of the film, and is implemented with the longitudinal sealing, thus making it possible to obtain a paper container free from a poor sealing.

According to the paper container with a longitudinal sealing tape, which is composed as described above, the following effects are obtained. Tobe specific, the film constituting the longitudinal sealing tape in a paper container, which covers the paper container, is formed by the co-extrusion inflation method in which the resin is fused and formed at a temperature lower than that of the extrusion lamination method, and is not subjected to an excessive heat history as compared with films formed by other methods. Accordingly, the heat-fusible synthetic resin layers forming outermost layers of both of front and back surfaces of the film having the multi-layered structure exhibit more excellent sealing property at the time of fusion thereof, and the entire film having the multi-layered structure is formed while hardly being subjected to the elongation. Therefore, the film exhibits excellent softness and elongation. Hence, by the heating and the pressurization at the time of laterally sealing the packaging material tube formed in such a manner that the longitudinal seam at which both of the longitudinal edges of the packaging material are superposed on each other is covered with the longitudinal sealing tape composed of the film and is longitudinally sealed, the spaces between the laterally sealed packaging material and the end surfaces of the longitudinal sealing tape are sufficiently filled, thus making it possible to obtain a paper container free form a poor sealing.

### BRIEF DESCRIPTION OF THE DRAWINGS

FIG. 1 is an enlarged cross-sectional view showing a laminated structure of a longitudinal sealing tape in a paper container according to Examples 1, 2, and Comparative Example of a longitudinal sealing tape in a paper container of the present invention.
FIG. 2 is a conceptual view showing steps executed in a filler which performs forming, filling, and hermetical sealing of a paper container with the longitudinal sealing tape in a paper container of the present invention and Comparative Example.
FIG. 3 is a partially cutaway perspective view of a brick-like paper container with a longitudinal sealing tape, which is formed by using the longitudinal sealing tape in a paper container of the present invention and Comparative Example.
FIG. 4 is an enlarged cross-sectional view taken along the line X-X of FIG. 3.

### BEST MODE FOR CARRYING OUT THE INVENTION

A description will be made below of an embodiment of the present invention.

A sealing tape and a longitudinal sealing tape in a paper container according to the present invention are composed of films each having a multi-layered structure in which outermost layers of both of front and back surfaces thereof are formed of heat-fusible synthetic resin layers and formed by a co-extrusion inflationmethod.

It is preferable to form the heat-fusible synthetic resin layers of an LDPE resin, an LLDPE resin, a heat-fusible synthetic resin containing the LDPE resin as a main component, which adopts blended matter of the LDPE resin and the LLDPE resin or blended matter of the LDPE resin and an HDPE resin, or the like. Further, it is preferable that a thickness of each heat-fusible synthetic resin layer be 30 µm or more. When the thickness of the heat-fusible synthetic resin layer is less than 30 µm, there is a fear in that spaces between the laterally sealed packaging material and end surfaces of the longitudinal sealing tape cannot be sufficiently filled even by heating and pressurization at the time of laterally sealing a packaging material tube.

It is preferable that a core layer in the multi-layered structure be formed of a gas barrier material layer. This gas barrier material layer can be formed of, a PET resin, an amorphous copolyester resin, an EVOH resin, or the like. A thickness of the core layer just needs to be a thickness sufficient for exerting required gas barrier property.

In the longitudinal sealing tape in a paper container according to the present invention, a tensile elongation when a measurement thereof is performed for a test piece with a width of 7.5 mm and a thickness of 100 µm in conformity with JIS K 7127 stays within a range of 300 to 800%. When the tensile elongation is less than 300%, there is a fear in that the longitudinal sealing tape does not exhibit sufficient softness and elongation even at the time of lateral sealing, resulting in that the spaces between the laterally sealed packaging material and the end surfaces of the longitudinal sealing tape cannot be filled sufficiently even by the heating and the pressurization at the time of laterally sealing the packaging material tube. Meanwhile, when the tensile elongation exceeds 800%, the longitudinal sealing tape is too easily elongated, resulting in difficult handling thereof in an actual operation.

In order to manufacture the sealing tape or the longitudinal sealing tape, a film is formed by co-extrusion using the co-extrusion inflation method. Manufacturing conditions in this case just need to be appropriately adjusted depending on the laminated structure of the tape, the thicknesses of the respective layers, types of the resins constituting the respective layers, and the like. In general, a fusible resin is extruded into a tube shape by using a multi-layer circular dice at an extrusion temperature of 120 to 250°C, and cooled and cut/opened while being drawn out at 50 to 150 m/min, thus making it possible to obtain the film having the multi-layered structure, which constitutes the sealing tape or the longitudinal sealing tape in a paper container according to the present invention.

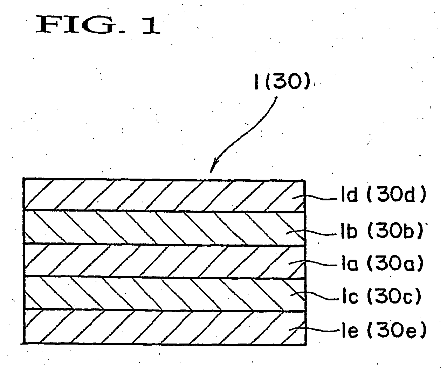

Next, a description will be made of an embodiment of the longitudinal sealing tape in a paper container according to the present invention based on the drawings. FIG. 1 is an enlarged cross-sectional view showing a laminated structure in Examples 1 and 2 of a longitudinal sealing tape 1 in a paper container according to the present invention. The longitudinal sealing tape 1 in a paper container as shown in the figure, is composed of a film having a five-layer structure including a core layer 1a, adhesion layers 1b and 1c, and outermost layers 1d and 1e.

### Example 1

In this example, the core layer 1a of the longitudinal sealing tape 1 in a paper container was formed of an EVOH resin (manufactured by Kuraray Co., Ltd.; trade name "Eval"). A thickness of this core layer 1a was set within a range of 10 to 20 µm. The adhesion layers 1b and 1c were formed of an adhesive resin (manufactured by Mitsui Chemicals, Inc.; trade name "Admer"). A thickness of each of those adhesion layers 1b and 1c was set within a range of 3 to 10 µm. The outermost layers 1d and 1e were formed of an LDPE resin (manufactured by Mitsui Chemicals, Inc.; trade name "Mirason 16P"). A thickness of each of those outermost layers 1d and 1e was set within a range of 35 to 45 µm. Then, a thickness of the entire longitudinal sealing tape 1 in a paper container was within a range of 86 to 112 µm, and a width thereof was set within a range of several millimeters to several ten millimeters. In the longitudinal sealing tape 1 in a paper container, a tensile elongation thereof was 500% (measured for a test piece with a width of 7.5 mm and a thickness of 100 µm in conformity with JIS K 7127). The longitudinal sealing tape 1 in a paper container was manufactured by the co-extrusion inflation method at an extrusion temperature of 180°C and an extrusion speed of 100 m/min by using a three-type and five-layered inflation laminator.

### Example 2

In this example, the longitudinal sealing tape 1 in a paper container was manufactured in a similar way to the above-described Example 1 except that the thermoplastic resin forming the outermost layers 1d and 1e on both of front and back surfaces of the longitudinal sealing tape 1 in a paper container was formed of an LLDPE resin (manufactured by Japan Polychem Corporation; trade name "Kernel") synthesized by a metallocene-type catalyst.

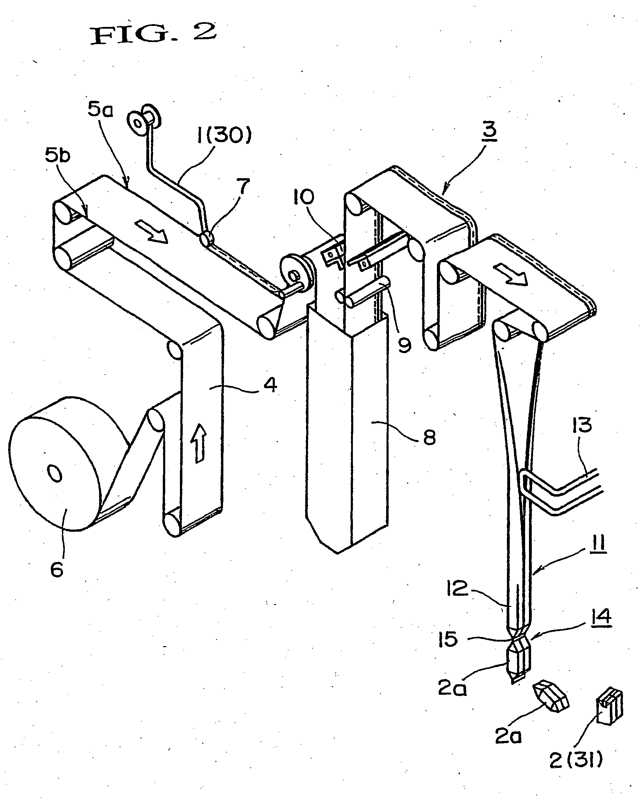

FIG. 2 is a conceptual view showing steps executed in a filler 3 which performs forming, filling, and hermetical sealing of a paper container 2 with the longitudinal sealing tape, which is covered with the longitudinal sealing tape 1 in a paper container as shown in the above-described Examples 1 and Example 2, and is implemented with the longitudinal sealing thereby. As show in the figure, a packaging material 4 is released from being wound around a feed portion 6 on a left end, first runs upward on the filler 3. Subsequently, the packaging material 4 runs in the right direction while allowing a surface thereof to be an inside of the tube to face upward, and in this process, one edge 5a of the packaging material 4 in the longitudinal direction is heated by hot air blown out of a heater (not shown). Then, an approximately half width of the longitudinal sealing tape 1 in a paper container is heat-fused to the heated one edge 5a of the packaging material 4 in the longitudinal direction by a pair of pressing rollers 7.

Next, the packaging material 4 passes through a disinfectant liquid layer 8, enters into an aseptic chamber (not shown), is gradually molded into a tubular shape while passing through squeeze rollers 9, an air knife 10, and molding rollers (not shown), and is molded into a packaging material tube 12 in a longitudinal sealing step 11. In this longitudinal sealing step 11, another edge 5b of the packaging material 4 in the longitudinal direction is heated by hot air blown out of a heater (not shown) . Then, the one edge 5a of the packaging material 4 in the longitudinal direction and the longitudinal sealing tape 1 in a paper container, which is heat-fused to the edge 5a concerned, are heat-fused to the heated another edge 5b of the packaging material 4 in the longitudinal direction.

The packaging material tube 12 molded as described above is filled with a liquid such as beverages by a filling pipe 13, and then, is implemented with lateral sealing at a fixed interval in a vertical direction in a lateral sealing step 14, and subsequently, is cut at the middle of a laterally sealed region 15, thereby being separated into individual packages 2a. Then, the separated packages 2a are formed into a final form such as a brick shape through a final step (not shown), and then become the paper containers 2 with the longitudinal sealing tapes.

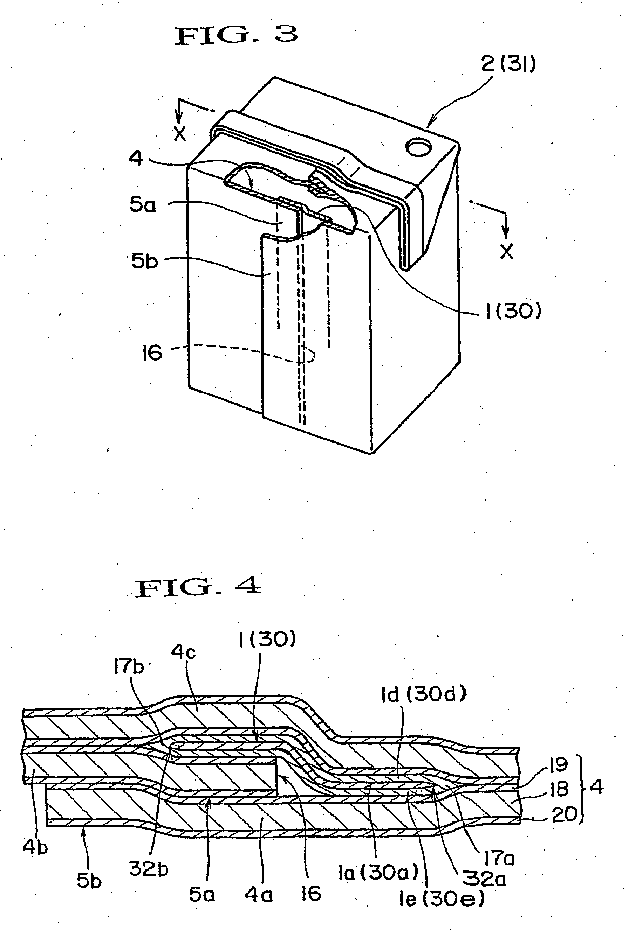

FIG. 3 shows a partially cutaway perspective view of the brick-shape paper container 2 with the longitudinal sealing tape, which is molded as described above by using the longitudinal sealing tape 1 in a paper container. In this paper container 2 with the longitudinal sealing tape, a container wall of a front right half thereof is formed of the another edge 5b of the packaging material 4 in the longitudinal direction, and a container wall of a front left half thereof is formed of the one edge 5a of the packaging material 4 in the longitudinal direction. Then, these edges 5a and 5b are superposed on each other and fused, and further, to an inner surface of a position at which they are superposed on each other, the longitudinal sealing tape 1 in a paper container is adhered by heat fusing across both of the edges 5a and 5b. A longitudinal seam in an inside of the paper container 2 with a longitudinal sealing tape is denoted by reference numeral 16. The longitudinal seam 16 is covered with the longitudinal sealing tape 1 in a paper container so as to prevent an end edge of the packaging material 4 from contacting the liquid in the paper container 2 with a longitudinal sealing tape.

FIG. 4 shows an enlarged cross-sectional view taken along the line X-X of FIG. 3. Note that, in this drawing, the adhesion layers 1b and 1c of the longitudinal sealing tape 1 in a paper container are omitted.

As shown in the drawing, in a cross-sectional portion taken along the line X-X of FIG. 3, that is, in a portion where the laterally sealed portion and the longitudinally sealed portion are superposed on each other, there are formed a space 17a between laterally sealed packaging materials 4a and 4c and an end surface on one side of the longitudinal sealing tape 1 in a paper container, and a space 17b between laterally sealed packaging members 4b and 4c and an end surface on the other side of the longitudinal sealing tape 1 in a paper container. As shown in FIG. 4, when the longitudinal sealing tape 1 in a paper container is the longitudinal sealing tape 1 in a paper container, which is shown in the above-described Example 1, the LDPE resin layers forming the outermost layers 1d and 1e of both of front and back surfaces of the film constituting the longitudinal sealing tape 1 in a paper container is fused by the heating when the packaging material tube 12 is laterally sealed, and the core layer 1a also exhibits excellent softness and elongation due to the heating and the pressurization when the packaging material tube 12 is laterally sealed, and sufficiently fills the spaces 17a and 17b, thus making it possible to obtain the complete sealability.

Further, also in the case of the longitudinal sealing tape 1 in a paper container as shown in the above-described Example 2, the LLDPE resin layers synthesized by the metallocene-series catalyst, which form the outermost layers 1d and 1e of both of front and back surfaces of the film constituting the longitudinal sealing tape 1 in a paper container, are fused by the heating when the packaging tube 12 is laterally sealed, and the core layer 1a also exhibits excellent softness and elongation due to the heating and the pressurization when the packaging material tube 12 is laterally sealed, and sufficiently fills the above-described spaces 17a and 17b, thus making it possible to obtain the complete sealability. Note that, as shown in FIG. 4, the packaging material 4 is formed by laminating heat-fusible synthetic resin layers 19 and 20 on both of front and back surfaces of a base layer 18.

### Comparative Example

As Comparative Example, a longitudinal sealing tape 30 in a paper container (see FIG. 1), which is composed of a film having a laminated structure similar to that of the longitudinal sealing tape 1 in a paper container, which is shown in the above-described Examples 1 and 2, that is, a laminated structure of a core layer 30a, adhesion layers 30b and 30c, and outermost layers 30d and 30e, was obtained in the following manner.

In the longitudinal sealing tape 30 in a paper container, the core layer 30 was formed of an EVOH resin extended film (manufactured by Kuraray Co., Ltd.; trade name "Exceed"). A thickness of this core layer 1a was set within a range of 10 to 20 µm. The adhesion layers 30b and 30c were formed of anchor coat (made of Dainichiseika Color & Chemicals Mfg. Co., Ltd.; trade name "Seikadyne"). A thickness of each of those adhesion layers 30b and 30c was set within a range of 1 to 3 µm. The Outermost layers 30d and 30e were formed of an LDPE resin (manufactured by Mitsui Chemicals, Inc.; trade name "Mirason 16P"). A thickness of each of those outermost layers 30d and 30e was set within a range of 35 to 45 µm. Then, a thickness of the entire longitudinal sealing tape 30 in a paper container was within a range of 86 to 112 µm, and a width thereof was set within a range of several millimeters to several ten millimeters. In the longitudinal sealing tape 30 in a paper container, a tensile elongation thereof was 150% (measured for a test piece with a width of 7.5 mm and a thickness of 100 µm in conformity with JIS K 7127), and was manufactured by a dry laminator method.

By using this longitudinal sealing tape 30 in a paper container, and through steps similar to the steps executed in the filler 3 which performs forming, filling, and hermetical sealing of the paper container 2 with the longitudinal sealing tape, which is covered with the longitudinal sealing tape 1 in a paper container as shown in the above-described Examples 1 and Example 2, and is implemented with the longitudinal sealing thereby, a brick-shape paper container 31 (see FIG. 3) with a longitudinal sealing tape was molded. In the obtained paper container 31 with a longitudinal sealing tape, though LDPE resin layers forming the outermost layers 30d and 30e are fused by the heating when the packaging material tube 12 is laterally sealed, the softness and elongation of the core layer 1a are not sufficient. Accordingly, in the spaces 17a and 17b (see FIG. 4), in portions 32a and 32b in the vicinities of the core layer 30a, which are on end surfaces of the longitudinal sealing tape 30 in a paper container, gaps which cannot be completely filled with the LDPE resin is generated, and complete sealing cannot be obtained.

## Claims

1. A method of applying a longitudinal sealing tape (1) into a paper container (2a), wherein the longitundinal sealing tape (1) is used for covering and longitudinally sealing a longitudinal seam of the paper container;
the paper container (2a) being formed through a step of forming a tube (12) from a belt-like packaging material (4) by superimposing and heat-fusing both of longitudinal edges to form the longitundinal seam, the belt-like packaging material (4) having a base layer (18) made of a paperboard and outermost layers (19, 20) of both of front and back surfaces made of a heat-fusible synthetic resin;
wherein the longitudinal sealing tape (1) is composed of a film having a multi-layered (1a, 1b, 1c, 1d, 1e) structure in which outermost layers (1d, 1e) of both of front and back surfaces are formed of polyethylene resin layers **characterised in that** the film is formed by a co-extrusion inflation method and wherein a tensile elongation of the film is 300 to 800%.

2. The method of claim 1 wherein the longitudinal sealing tape (1) has a core layer (1a) in the multi-layered structure is formed of a gas barrier material layer.

3. A paper container with a longitudinal sealing tape obtained by the method according to claim 1 or 2.

4. A longitudinal sealing tape (1) for a paper container composed of a film having a multi-layered (1a, 1b, 1c, 1d, 1e) structure in which outermost layers (1d, 1e) of both of front and back surfaces are formed of polyethylene resin layers **characterised in that** the film is formed by a co-extrusion inflation method and wherein a tensile elongation of the film is 300 to 800%.

5. The longitudinal sealing tape (1) of claim 4 wherein a core layer (1a) in the multi-layered structure is formed of a gas barrier material layer.

## Patentansprüche

1. Verfahren zum Aufbringen eines längslaufenden Dichtbandes (1) in einem Papierbehälter (2a), wobei das längslaufende Dichtband (1) zum Abdecken und Abdichten in Längsrichtung einer längslaufenden Naht des Papierbehälters verwendet wird;
wobei der Papierbehälter (2a) durch einen Schritt des Ausbildens einer Röhre (12) aus einem bandartigen Verpackungsmaterial (4) durch Überlagern und Warmverschweißen beider von längslaufenden Kanten, um die längslaufende Naht auszubilden, ausgebildet wird, wobei das bandartige Verpackungsmaterial (4) eine Basisschicht (18), die aus einer Pappe hergestellt ist, und äußerste Schichten (19, 20) von beiden von vorderen und hinteren Oberflächen, die aus einem wärmeschmelzbaren Kunstharz hergestellt sind, aufweist;
wobei das längslaufende Dichtband (1) aus einer Folie besteht, die eine mehrschichtige (1a, 1b, 1c, 1d, 1e) Struktur aufweist, in der äußerste Schichten (1d, 1e) von beiden von vorderen und hinteren Oberflächen aus Polyethylenharzschichten ausgebildet sind, **dadurch gekennzeichnet, dass** die Folie durch ein Coextrusions-Blasverfahren ausgebildet ist und wobei eine Zugdehnung der Folie 300 bis 800 % ist.

2. Verfahren gemäß Anspruch 1, wobei das längslaufende Dichtband (1) eine Kernschicht (1a) in der mehrschichtigen Struktur aufweist, aus einer Gasbarrierematerialschicht ausgebildet ist.

3. Papierbehälter mit einem längslaufenden Dichtband das durch das Verfahren gemäß Anspruch 1 oder 2 erhalten wird.

4. Längslaufendes Dichtband (1) für Papierbehälter, bestehend aus einer Folie, die eine mehrschichtige (1a, 1b, 1c, 1d, 1e) Struktur aufweist, in der äußerste Schichten (1d, 1e) von beiden von vorderen und hinteren Oberflächen aus Polyethylenharzschichten ausgebildet sind, **dadurch gekennzeichnet, dass** die Folie durch ein Coextrusions-Blasverfahren ausgebildet ist und wobei eine Zugdehnung der Folie 300 bis 800 % ist.

5. Längslaufendes Dichtband (1) gemäß Anspruch 4, wobei eine Kernschicht (1a) in der mehrschichtigen Struktur aus einer Gasbarrierematerialschicht ausgebildet ist.

## Revendications

1. Procédé permettant d'appliquer une bande d'étanchéité longitudinale (1) dans un contenant en papier (2a), dans lequel la bande d'étanchéité longitudinale (1) est utilisée pour recouvrir et sceller dans le sens longitudinal un joint longitudinal du contenant en papier ;
le contenant en papier (2a) étant formé par le biais d'une étape consistant à former un tube (12) à partir d'un matériau d'emballage similaire à une courroie (4) par superposition et fusion thermique des deux bords longitudinaux pour former le joint longitudinal, le matériau d'emballage similaire à une courroie (4) ayant une couche de base (18) réalisée à partir d'un carton et des couches se trouvant le plus à l'extérieur (19, 20) des deux surfaces avant et arrière réalisées à partir d'une résine synthétique thermo-fusible ;
dans lequel la bande d'étanchéité longitudinale (1) est composée d'un film ayant une structure à plusieurs couches (1a, 1b, 1c, 1d, 1e) dans laquelle les couches se trouvant le plus à l'extérieur (1d, 1e) des deux surfaces avant et arrière sont formées à partir de couches de résine de polyéthylène, **caractérisé en ce que** le film est formé par un procédé de gonflage par co-extrusion, et dans lequel un allongement par traction du film est compris entre 300 et 800 %.

2. Procédé selon la revendication 1, dans lequel la bande d'étanchéité longitudinale (1) a une couche centrale (1a) dans la structure à plusieurs couches qui est formée à partir d'une couche de matériau imperméable aux gaz.

3. Contenant en papier ayant une bande d'étanchéité longitudinale obtenue par le procédé selon la revendication 1 ou la revendication 2.

4. Bande d'étanchéité longitudinale (1) pour un contenant en papier composée d'un film ayant une structure à plusieurs couches (1a, 1b, 1c, 1d, 1e) dans laquelle les couches se trouvant le plus à l'extérieur (1d, 1e) des deux surfaces avant et arrière sont formées à partir de couches de résine de polyéthylène, **caractérisée en ce que** le film est formé par un procédé de gonflage par co-extrusion, et dans laquelle un allongement par traction du film est compris entre 300 et 800 %.

5. Bande d'étanchéité longitudinale (1) selon la revendication 4, dans laquelle une couche centrale (1a) dans la structure à plusieurs couches est formée à partir d'une couche de matériau imperméable aux gaz.
